# EUROPEAN PATENT SPECIFICATION

(11) **EP 3 636 502 B1**
(45) Date of publication and mention of the grant of the patent: **22.06.2022**
(21) Application number: 17935458.4
(22) Date of filing: 28.12.2017
(51) Int. Cl.: B60T 8/18, B60T 13/68

(54) **TRAIN BRAKE CYLINDER PRESSURE CONTROL SYSTEM AND RAIL TRAIN**
SYSTEM ZUR STEUERUNG DES BREMSZYLINDERDRUCKS EINES ZUGES UND SCHIENENZUG
SYSTÈME DE COMMANDE DE PRESSION DE CYLINDRE DE FREIN DE TRAIN ET TRAIN FERROVIAIRE

(30) Priority: 20.12.2017 CN 201711386196
(43) Date of publication of application: 15.04.2020
(73) Proprietor: CRRC Changchun Railway Vehicles Co., Ltd., Changchun, Jilin 130000 (CN)
(72) Inventor: QIAO, Feng, Jilin 130000 (CN); XIN, Zhiqiang, Jilin 130000 (CN); MA, Yongjing, Jilin 130000 (CN); ZHAO, Yangkun, Jilin 130000 (CN)
(74) Representative: Behr, Wolfgang
(86) International application number: PCT/CN2017/119177
(87) International publication number: WO 2019/119491

(56) References cited:
- WO-A1-2005/005216
- CN-A- 102 167 021
- CN-A- 107 298 111
- JP-A- H0 867 240
- JP-A- H0 867 241
- JP-A- S62 163 853
- JP-B2- 4 310 149
- US-A- 4 417 767

## Description

### FIELD

The present invention relates to the technical filed of braking control of a train, and particularly to a train brake cylinder pressure control system and a railroad train.

### BACKGROUND

With the continuous development in the field of high-speed trains, more and more people choose high-speed trains and more and more high-speed train services are provided, because people all prefer to more convenient and comfortable, faster and safer travels. Therefore, a researching direction for those skilled in the art is to improve convenience and comfort while ensuring safety of high-speed trains.

Normally, a high-speed train is classified as an unloaded train or a heavy-loaded train according to a passenger carrying situation. Hundreds or thousands of passengers may be carried in a standard multiple unit train. If a fixed braking force is applied without consideration of load situation of the train, a braking distance of the heavy-loaded train is much longer than a braking distance of the unloaded train, and a deceleration of the unloaded train is much greater than a deceleration of the heavy-loaded train. Also, a magnitude of the braking force transmitted to a brake execution mechanism is fixed in the conventional technology. A train can be parked safely using a suitable and fixed braking force in an ideal condition. However, wheels may be locked constantly in a case that a fixed large braking force is applied directly on a train traveling at a high speed, which easily results in a danger.

In the conventional technology, a driver of the train adjusts the magnitude of the braking force manually according to his experiences in a solution, and multiple separate functional valves constitute a complex system in another solution, in order to park the train accurately at the same and safe deceleration in different states. However, the former solution heavily depends on the experienced driver, which is an unstable factor and cannot ensure accuracy rate, resulting in a serious risk. The latter solution involves a larger number of the functional valves, which results in a bulky structure, a complex operation and a poor using effect. A known train brake cylinder pressure control system is known from WO2005005216 A1.

Therefore, a problem urgent to be solved by those skilled in the art is how to overcome the above technical defects in the existing train brake cylinder pressure adjusting method.

### SUMMARY

An objective of the present invention is to provide a train brake cylinder pressure control system. In the train brake cylinder pressure control system, phasic braking and phasic releasing for a train can be implemented by a distributing valve, and a pressure outputted from the distributing valve serves as a parameter for affecting a comprehensive adjustment of a relay valve. At most four different pressures are adjusted by the relay valve comprehensively, to output a brake cylinder pressure to park the train with the same deceleration and the same braking distance under conditions of same speed but different loads, thereby reducing an occurrence probability of a large braking force in an unloaded state of the train and ensuring the same braking distance of the train, which facilitates a signal system control and provides safer and more comfortable ride experience to the passenger.

Another objective of the present invention is to provide a railroad train provided with the train brake cylinder pressure control system described above.

In order to realize the above objectives, a train brake cylinder pressure control system is provided in the present invention, which includes:
a load pressure feedback device configured to generate a load pressure based on a load situation of the train;
a train brake air reservoir configured to output a brake air reservoir pressure;
a distributing valve including two input ends and one output end, and configured to adjust the brake air reservoir pressure and a brake pipe pressure and output an indirect braking precontrol pressure in a phasic manner, where a first input end of the distributing valve is in communication with the train brake air reservoir, and a second input end of the distributing valve is in communication with a train brake pipe;
a bidirectional valve including two input ends and one output end, and configured to select and output the larger of a straight air braking precontrol pressure obtained by a pressure control device and the indirect braking precontrol pressure, where a first input end of the bidirectional valve is in communication with the train brake air reservoir through a control pipeline, and a second input end of the bidirectional valve is in communication with the output end of the distributing valve, and the control pipeline is provided with the pressure control device;
a relay valve configured to adjust a train braking pressure and output a brake cylinder pressure, where the relay valve includes four pressure input ends and one pressure output end, where a first pressure input end of the relay valve is a basic control pressure input end, a second pressure input end of the relay valve is a high-low-pressure controlled pressure input end, and the first pressure input end and the second pressure input end are in parallel communication with the output end of the bidirectional valve, an electromagnetic valve is provided in a parallel pipeline where the second pressure input end is provided, a third pressure input end of the relay valve is a brake air reservoir pressure input end and is in communication with the train brake air reservoir, and a fourth pressure input end of the relay valve is a load pressure input end and is in communication with the load pressure feedback device; and
a brake execution mechanism which is in communication with the output end of the relay valve and is configured to brake wheels of the train using the brake cylinder pressure.

Optionally, an input end of the load pressure feedback device is in communication with an air spring of the train, and an output end of the load pressure feedback device is in communication with the fourth pressure input end of the relay valve. The load pressure feedback device is configured to transmit the load pressure provided by the air spring of the train to the relay valve through the fourth pressure input end.

Optionally, the load pressure feedback device is further provided with a pressure sensor configured to detect a value of the load pressure.

Optionally, the pressure control device includes a first electromagnetic valve, a second electromagnetic valve and a pressure reducing valve sequentially provided in an air intake direction.

Optionally, a first bypass in communication with the outside is provided between the first electromagnetic valve and the second electromagnetic valve, and the first bypass is provided with a third electromagnetic valve.

Optionally, a second bypass is provided between the second electromagnetic valve and the pressure reducing valve, and the second bypass is in communication with a first capacity air reservoir.

Optionally, a third bypass is provided between the distributing valve and the bidirectional valve, and the third bypass is in communication with a second capacity air reservoir.

Optionally, the train brake cylinder pressure control system further includes a unidirectional valve. An input end of the unidirectional valve is in communication with the output end of the relay valve, and an output end of the unidirectional valve is in communication with the third pressure input end.

Optionally, the train brake cylinder pressure control system further includes:
a speed sensor configured to detect a traveling speed of the train in a real-time manner and transmit a real-time speed signal; and
a high-low-pressure adjusting device for the brake cylinder pressure which is in communication with each of the speed sensor and the electromagnetic valve, and is configured to receive the real-time speed signal and determine whether the real-time speed signal exceeds a speed threshold value, and control the electromagnetic valve to be turned on in a case that the real-time speed signal exceeds the speed threshold value, and control the electromagnetic valve to be turned off in a case that the real-time speed signal does not exceed the speed threshold value.

In order to realize the above objectives, a railroad train is further provided in the present invention, which includes a train body and a braking system. The braking system is provided with the train brake cylinder pressure control system described above.

With the technical solutions in the present invention, phasic braking and phasic releasing for the train can be implemented by the distributing valve, and the pressure outputted from the distributing valve serves as a parameter for affecting a comprehensive adjustment of the relay valve. At most four different pressures are adjusted by the relay valve comprehensively, to output a brake cylinder pressure to park the train with the same deceleration and the same braking distance under conditions of same speed but different loads, thereby reducing an occurrence probability of a large braking force in an unloaded state of the train and ensuring the same braking distance of the train, which facilitates a signal system control and provides safer and more comfortable ride experience to the passenger.

The railroad train provided with the train brake cylinder pressure control system described above is further provided in the present invention . Since the train brake cylinder pressure control system has the above technical effects, the railroad train provided with the train brake cylinder pressure control system also has the same technical effects.

### BRIEF DESCRIPTION OF THE DRAWINGS

In order to more clearly illustrate the technical solution in the embodiments of the present invention or in the conventional technology, in the following, drawings required in the description of the embodiments or the conventional technology will be introduced simply. Apparently, the drawings in the following description show only some embodiments of the present disclosure. For those skilled in the art, other drawings can also be obtained according to the provided drawings without any creative work.
Figure 1 is a principle diagram of an air path of a train brake cylinder pressure control system according to an embodiment of the present invention ; and
Figure 2 is a principle diagram of an air path of another train brake cylinder pressure control system according to an embodiment of the present invention.

In the drawings:

| | | | |
|---|---|---|---|
| 10. | Load pressure feedback device; | 20. | Train brake air reservoir; |
| 30. | Distributing valve; | 40. | Bidirectional valve; |
| 50. | Relay valve; | 60. | Brake execution mechanism; |
| 31. | First input end (distributing valve); | 32. | Second input end (distributing valve); |
| 33. | Second capacity air reservoir; | 41. | First input end (bidirectional valve); |
| 42. | Second input end (bidirectional valve); | 51. | First pressure input end; |
| 52. | Second pressure input end; | 53. | Third pressure input end; |
| 54. | Fourth pressure input end; | 521. | Electromagnetic valve; |
| 410. | Pressure control device; | 411. | First electromagnetic valve; |
| 412. | Second electromagnetic valve; | 413. | Pressure reducing valve; |
| 414. | Third electromagnetic valve; | 415. | First capacity air reservoir. |

### DETAILED DESCRIPTION OF THE EMBODIMENTS

The core of the present invention is to provide a train brake cylinder pressure control system and a railroad train, in which phasic braking and phasic releasing for a train can be implemented by a distributing valve, and a pressure outputted from the distributing valve serves as a parameter for affecting a comprehensive adjustment of a relay valve. At most four different pressures are adjusted by the relay valve comprehensively, to output a brake cylinder pressure to park the train with the same deceleration and the same braking distance under conditions of same speed but different loads, thereby reducing an occurrence probability of a large braking force in an unloaded state of the train and ensuring the same braking distance of the train, which facilitates a signal system control and provides a safer and more comfortable ride experience to the passenger.

In order to make the objective, the technical solutions and the advantages of the embodiments of the present invention clearer, the technical solutions according to the embodiments of the present invention are described clearly and completely in conjunction with drawings in the embodiments of the present invention.

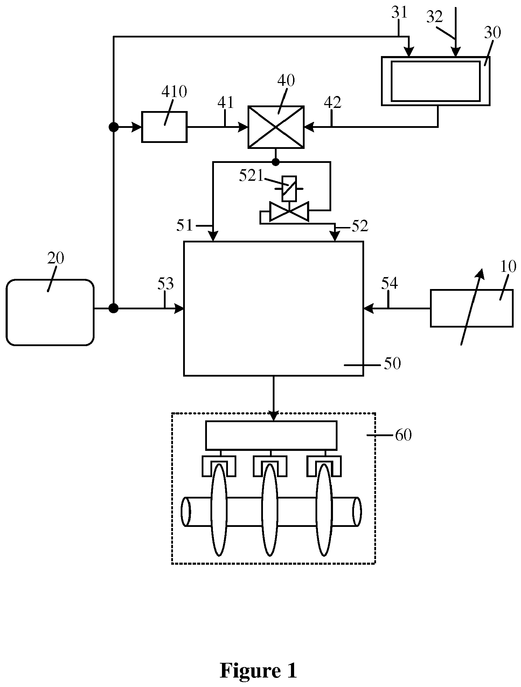

Reference is made to Figure 1, which is a principle diagram of an air path of a train brake cylinder pressure control system according to an embodiment of the present invention.

The train brake cylinder pressure control system includes a load pressure feedback device 10, a train brake air reservoir 20, a distributing valve 30, a bidirectional valve 40, a relay valve 50 and a brake execution mechanism 60.

The load pressure feedback device 10 is configured to generate a load pressure based on a load situation of a train.

The load pressure feedback device 10 is provided in order to detect a current load condition of the train, and determine whether a current load state of the train is an unloaded state, a heavy-loaded state or other state. The load pressure feedback device 10 generates the load pressure based on an actual load situation of the train, such that a large load pressure is obtained in a case of a heavy-loaded train, and a small load pressure is obtained in a case of an unloaded train. The relay valve 50 can realize adjustments corresponding to different load pressures.

An input end of the load pressure feedback device 10 is in communication with an air spring of the train. An output end of the load pressure feedback device 10 is in communication with a fourth pressure input end 54 of the relay valve 50. The load pressure feedback device 10 is configured to transmit the load pressure provided by the air spring of the train to the relay valve 50 through the fourth pressure input end 54.

Furthermore, a pressure sensor for detecting a value of the load pressure may be further provided in the vicinity of the load pressure feedback device 10, in order to detect whether the load pressure is transmitted abnormally. For example, a part of the load pressure may be lost due to a damaged transmission pipeline. The pressure sensor can facilitate subsequent fault analysis and accurate fault location.

The train brake air reservoir 20 is configured to output a brake air reservoir pressure.

The distributing valve 30 includes two input ends and one output end. A first input end 31 of the distributing valve 30 is in communication with the train brake air reservoir 20, and a second input end 32 of the distributing valve 30 is in communication with a train brake pipe. The distributing valve 30 is configured to adjust the brake air reservoir pressure and a brake pipe pressure and output indirect braking precontrol pressure in a phasic manner.

The train brake air reservoir 20 may serve as an air source of the train to provide compressed air required for train braking, and use the pressure of the provided compressed air as the brake air reservoir pressure. A series of processing is performed on the outputted brake air reservoir pressure before actual train braking. The distributing valve 30 is configured to comprehensively adjust the brake air reservoir pressure and the brake pipe pressure, and output the indirect braking precontrol pressure in a phasic manner. That is, the distributing valve 30 outputs the indirect braking precontrol pressure to a second input end 42 of the bidirectional valve 40 in a case of meeting an operating condition of the distributing valve 30, to implement phasic braking and phasic releasing in coordination with operating characteristics of the bidirectional valve 30. The brake air reservoir pressure provided by the train brake air reservoir 20 may be processed in multiple manners according to different vehicle types, different operating conditions and different function focuses, which may be selected flexibly according to an actual condition. Regarding the train braking, each of a straight air braking precontrol pressure obtained after the braking air reservoir pressure passes through a pressure control device 410 and the indirect braking precontrol pressure provided by the distributing valve 30 can be used for train braking in an emergent braking mode.

The bidirectional valve 40 includes two input ends and one output end. A first input end 41 of the bidirectional valve 40 is in communication with the train brake air reservoir 20 through a control pipeline, and a second input end 42 of the bidirectional valve 40 is in communication with an output end of the distributing valve 30. The control pipeline is provided with the pressure control device 410. The bidirectional valve 40 is configured to select and output the larger of the straight air braking precontrol pressure obtained through the pressure control device 410 and the indirect braking precontrol pressure.

In the present embodiment, the bidirectional valve 40 is used as a selecting device for selecting the larger of the straight air braking precontrol pressure and the indirect braking precontrol pressure in the emergent braking mode. An operating principle of the bidirectional valve 40 is similar to that of the game of tug-of-war. As shown in Figure 1, the pressure inputted into the first input end 41 is compared with the pressure inputted into the second input end 42, and the larger pressure is the "winner" and is outputted as a final outputted pressure of the bidirectional valve 40 to be transmitted to a subsequent device. The selection by the bidirectional valve 40 between the straight air braking precontrol pressure and the indirect braking precontrol pressure is considered for the train's security. Redundant protection is required in each functional mechanism. An unpredictable serious consequence may be caused if only one of the pressures is obtained and abnormality occurs in obtaining the only one pressure. Two different pressure values may be obtained if two different pressure processing manners are adopted, and the subsequent device can still operate normally through the bidirectional valve 40 if abnormality occurs in one of the pressure processing manners.

In coordination with the bidirectional valve 40, the distributing valve 30 outputs the indirect braking precontrol pressure in a phasic manner in a case of meeting an operating condition, that is, no braking pressure is transmitted to the bidirectional valve 40 through the second input end 42 in a case that no indirect braking precontrol pressure is outputted. In this case, the bidirectional valve 40 transmits the straight air braking precontrol pressure transmitted through the first input end 41 to a subsequent device directly. Therefore, selection and rotation are performed between the two braking precontrol pressure with different magnitudes, thereby solving technical defects in the conventional technology.

The relay valve 50 is configured to adjust a train braking pressure, and output a brake cylinder pressure. The relay valve 50 includes four pressure input ends and one pressure output end. A first pressure input end 51 of the relay valve 50 is a basic control pressure input end, and a second pressure input end 52 of the relay valve 50 is a high-low-pressure controlled pressure input end. The first pressure input end 51 and the second pressure input end 52 are in parallel communication with the output end of the bidirectional valve 40. An electromagnetic valve 521 is provided in a parallel pipeline where the second voltage input end 52 is provided. A third pressure input end 53 of the relay valve 50 is a brake air reservoir pressure input end, and is in communication with the train brake air reservoir 20. A fourth pressure input end 54 of the relay valve 50 is a load pressure input end, and is in communication with the load pressure feedback device 10.

The relay valve 50 is configured to adjust a train braking pressure based on at most four different inputted pressures using a mechanism structure thereof, to input the adjusted brake cylinder pressure to the brake execution mechanism of the train. A first control pressure is inputted to the relay valve 50 through the basic control pressure input end, and a second control pressure is inputted to the relay valve 50 through the high-low-pressure controlled pressure input end. The two different control pressure input ends are provided in order to determine whether to input the second control pressure to the relay valve 50 based on a traveling speed of the train, such that the brake cylinder pressure obtained by the relay valve 50 is adjusted based on the traveling speed of the train. As shown in Figure 1, the first pressure input end 51 serving as the basic control pressure input end is always in a turned-on state, while an electromagnetic valve 521 is provided in an air pipeline for the second pressure input end 52 serving as the high-low-pressure controlled pressure input end, to control whether to input the second control pressure to the relay valve 50.

An adhesive force between a track and a wheel of a train changes significantly with the traveling speed of the train. The adhesive force between a track and a wheel of the train traveling at a high speed is significantly less than the adhesive force between a track and a wheel of the train traveling at a low speed. If the same braking force is applied to the train traveling at the low speed and the train traveling at the high speed, a danger situation such as wheel locking is caused easily by a small adhesive force between the track and the wheel of the train traveling at the high speed. Therefore, two control pressure input ends are used in the present embodiment. One of the two control pressure input ends is always in a turned-on state. The other of the two control pressure input ends is used to selectively transmit the second control pressure to the relay valve 50 through the second pressure input end 52 serving as the high-low-pressure controlled pressure input end based on a powered-on state or a powered-off state of the electromagnetic valve 521, so as to comprehensively adjust the braking pressure. Therefore, a small braking force is provided to the train traveling at a high speed, to avoid the danger situation such as wheel locking, while a large braking force is provided to the train traveling at a low speed, to better ensure life safety of the passengers and realize safe parking.

The following is an implementation for the electromagnetic valve 521 to control whether to output the second control pressure based on the traveling speed of the train by using a speed sensor and a high-low-pressure adjusting device for the brake cylinder pressure. The high-low-pressure adjusting device for the brake cylinder pressure is configured to control the electromagnetic valve 521 based on a received real-time speed signal.

The speed sensor is configured to detect a traveling speed of the train in a real-time manner and transmit a real-time speed signal.

The high-low-pressure adjusting device for the brake cylinder pressure is in communication with each of the speed sensor and the electromagnetic valve 521, and is configured to receive the real-time speed signal and determine whether the real-time speed signal exceeds a speed threshold value, and control the electromagnetic valve 521 to be turned on in a case that the real-time speed signal exceeds the speed threshold value, and control the electromagnetic valve 521 to be turned-off in a case that the real-time speed signal does not exceed the speed threshold value.

For example, in a case that it is detected that a current traveling speed of the train exceeds 255km/h, the electromagnetic valve 521 is controlled to be in a powered-off state, and the electromagnetic valve 521 is turned on, to input the second control pressure to the relay valve 50. In a case that it is detected that a current traveling speed of the train does not exceed 255km/h, the electromagnetic valve 521 is controlled to be in a powered-on state, and the electromagnetic valve 521 is turned off, to not input the second control pressure to the relay valve 50.

In a case that only one speed threshold value is set, the traveling speed of the train may be simply determined as a low speed or a high speed. More speed threshold values may also be set, to realize more accurate determination of a current situation and higher control precision, which is not limited herein. The suitable number of threshold values may be determined according to a comprehensive consideration of actual situations and other influencing factors.

Furthermore, a unidirectional valve may also be provided for security protection. An input end of the unidirectional valve is in communication with an output end of the relay valve 50, and an output end of the unidirectional valve is in communication with the third pressure input end 53. As shown in Figure 1, the brake cylinder pressure outputted from the output end of the relay valve 40 is less than the brake air reservoir pressure transmitted from the train brake air reservoir 20 to the relay valve 50 through the third pressure input end 53 in a normal situation, in which case the unidirectional valve does not operate. The unidirectional valve operates only in a case that the brake air reservoir pressure is less than the brake cylinder pressure due to an abnormal situation, to protect the relay valve 50. In practice, the unidirectional valve is enabled to operate only in a case that no brake air reservoir pressure is transmitted to the relay valve 50 through the third pressure input end 53, to direct a part of the outputted cylinder brake pressure to the third pressure input end 53.

The brake execution mechanism 60 is in communication with the output end of the relay valve 50, and is configured to brake wheels of the train using the brake cylinder pressure, so that the train is parked with the same braking distance under conditions of different loads and the same traveling speed.

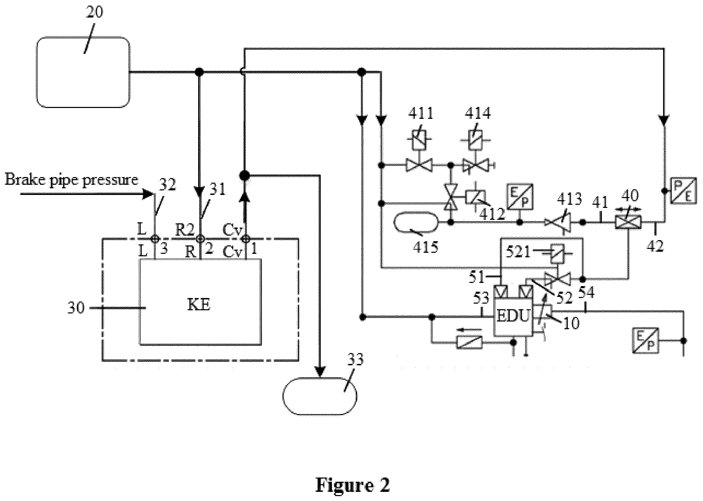

Reference is made to Figure 2, which is a principle diagram of an air path of another train brake cylinder pressure control system according to an embodiment of the present invention.

Based on the above embodiment, a specific structure of the pressure control device is described.

The pressure control device 410 includes a first electromagnetic valve 411, a second electromagnetic valve 412 and a pressure reducing valve 413 sequentially provided in an air intake direction. A first bypass in communication with the outside is provided between the first electromagnetic valve 411 and the second electromagnetic valve 412, and the first bypass is provided with a third electromagnetic valve 414. A second bypass is provided between the second electromagnetic valve 412 and the pressure reducing valve 413, and the second bypass is in communication with a first capacity air reservoir 415. A third bypass is provided between the distributing valve 30 and the bidirectional valve 40, and the third bypass is in communication with a second capacity air reservoir 33.

With the arrangement shown in Figure 2, the braking air reservoir pressure transmitted from the train brake air reservoir 20 is controlled. The third electromagnetic valve 414, the first capacity air reservoir 415, the first bypass having the third electromagnetic valve 414, and the second bypass having the first capacity air reservoir 415 are provided optionally, in order to buffer the brake air reservoir pressure in consideration of requirements in the actual situation. Also, there is not only the buffering manner shown in Figure 2. The electromagnetic valves, the pressure reducing valve and the capacity air reservoirs may also be implemented by the same or similar devices or apparatus, and may be adjusted according to a type of the train, an actual operating condition and a function focus, which is not limited herein.

Furthermore, in Figure 2, the E/P located between the second electromagnetic valve 412 and the pressure reducing valve 413, the P/E located on a pipeline having the second input end 42 of the bidirectional valve 40, and the E/P located on a pipeline having the input end of the load pressure feedback device 10 are all sensors configured to measure and feedback pressure values at their positions. In Figure 2, the device, which is directly below the third pressure input end 53 and in communication to the output end of the relay valve 50 (EDU) and the third pressure input end 53, is the above-mentioned unidirectional valve. Furthermore, the first input end 31 and the second input end 32 of the distributing valve 30 (KE) may also be provided with some valves and sensors, for troubleshooting and detection of the train. Also, in Figure 2, the load pressure feedback device 10 is integrated into the relay valve (EDU) 50. In practice, other functional components may also be integrated or separated based on actual needs.

Based on the technical solutions described above, with the train brake cylinder pressure control system according to the embodiment of the present invention, phasic braking and phasic releasing for the train can be implemented by the distributing valve, and the pressure outputted from the distributing valve serves as a parameter for affecting a comprehensive adjustment of the relay valve. At most four different pressures are adjusted by the relay valve comprehensively, to output a brake cylinder pressure to park the train with the same deceleration and the same braking distance under conditions of same speed but different loads, thereby reducing an occurrence probability of a large braking force in an unloaded state of the train and ensuring the same braking distances of the train, which facilitates a signal system control and provides a safer and more comfortable ride experience to the passenger.

Based on the embodiments described above, a railroad train is further provided in the present invention, which includes a train body and a braking system. The braking system is provided with the train brake cylinder pressure control system according to the above embodiments.

The embodiments of the present invention are described in a progressive manner, and each embodiment is focused on describing differences from other embodiments. References may be made one to another for the same or similar parts among the embodiments. Since the device in the embodiments corresponds to the method in the embodiments, the description for the device is simple, and reference may be made to the description of the method in the embodiment for relevant matters.

It can be further realized by those skilled in the art that the units and the algorithm steps of the examples described in conjunction with the embodiments herein can be implemented by electronic hardware, computer software or a combination thereof. In order to clearly illustrate interchangeability of the hardware and the software, compositions and steps of each example are illustrated above generally according to functions. Whether the function is implemented by hardware or software depends on particular application of the technical solution and a design constraint condition. The described function may be implemented by those skilled in the art using different methods for particular applications, and the implementation is not considered to exceed the scope of the present disclosure.

The principle and the embodiments of the present disclosure are illustrated herein by specific examples. The above description of embodiments is only intended to help understanding the methods and the core concept of the present invention.

## Claims

1. A train brake cylinder pressure control system, comprising:
a load pressure feedback device (10) configured to generate a load pressure based on a load situation of a train;
a train brake air reservoir (20) configured to output a brake air reservoir pressure;
a distributing valve (30) comprising two input ends and one output end, and configured to adjust the brake air reservoir pressure and a brake pipe pressure and output an indirect braking precontrol pressure in a phasic manner, wherein a first input end (31) of the distributing valve (30) is in communication with the train brake air reservoir (20), and a second input end (32) of the distributing valve (30) is in communication with a train brake pipe;
a bidirectional valve (40) comprising two input ends and one output end, and configured to select and output the larger of a straight air braking precontrol pressure obtained by a pressure control device (410) and the indirect braking precontrol pressure, wherein a first input end (41) of the bidirectional valve (40) is in communication with the train brake air reservoir (20) through a control pipeline, and a second input end (42) of the bidirectional valve (40) is in communication with the output end of the distributing valve (30), and the control pipeline is provided with the pressure control device (410);
a relay valve (50) configured to adjust a train braking pressure and output a brake cylinder pressure, wherein the relay valve (50) comprises four pressure input ends and one pressure output end, a first pressure input end (51) of the relay valve (50) is a basic control pressure input end, a second pressure input end (52) of the relay valve (50) is a high-low-pressure controlled pressure input end, and the first pressure input end (51) and the second pressure input end (52) are in parallel communication with the output end of the bidirectional valve (40), an electromagnetic valve (521) is provided in a parallel pipeline where the second pressure input end (52) is provided, a third pressure input end (53) of the relay valve (50) is a brake air reservoir pressure input end and is in communication with the train brake air reservoir (20), and a fourth pressure input end (54) of the relay valve (50) is a load pressure input end and is in communication with the load pressure feedback device (10); and
a brake execution mechanism (60) which is in communication with the output end of the relay valve (50) and is configured to brake wheels of the train using the brake cylinder pressure.

2. The train brake cylinder pressure control system according to claim 1, wherein an input end of the load pressure feedback device (10) is in communication with an air spring of the train, and an output end of the load pressure feedback device (10) is in communication with the fourth pressure input end (54) of the relay valve (50), and the load pressure feedback device (10) is configured to transmit the load pressure provided by the air spring of the train to the relay valve (50) through the fourth pressure input end (54).

3. The train brake cylinder pressure control system according to claim 2, wherein the load pressure feedback device (10) is further provided with a pressure sensor configured to detect a value of the load pressure.

4. The train brake cylinder pressure control system according to claim 1, wherein the pressure control device (410) comprises a first electromagnetic valve (411), a second electromagnetic valve (412) and a pressure reducing valve (413) sequentially provided in an air intake direction.

5. The train brake cylinder pressure control system according to claim 4, wherein a first bypass in communication with the outside is provided between the first electromagnetic valve (411) and the second electromagnetic valve (412), and the first bypass is provided with a third electromagnetic valve (414).

6. The train brake cylinder pressure control system according to claim 5, wherein a second bypass is provided between the second electromagnetic valve (412) and the pressure reducing valve (413), and the second bypass is in communication with a first capacity air reservoir (415).

7. The train brake cylinder pressure control system according to claim 6, wherein a third bypass is provided between the distributing valve (30) and the bidirectional valve (40), and the third bypass is in communication with a second capacity air reservoir (33).

8. The train brake cylinder pressure control system according to claim 7, further comprising a unidirectional valve, wherein an input end of the unidirectional valve is in communication with the output end of the relay valve (50), and an output end of the unidirectional valve is in communication with the third pressure input end (53).

9. The train brake cylinder pressure control system according to claim 8, further comprising:
a speed sensor configured to detect a traveling speed of the train in a real-time manner and transmit a real-time speed signal; and
a high-low-pressure adjusting device for the brake cylinder pressure, which is in communication with the speed sensor and the electromagnetic valve (521), and is configured to receive the real-time speed signal and determine whether the real-time speed signal exceeds a speed threshold value, and control the electromagnetic valve (521) to be turned on in a case that the real-time speed signal exceeds the speed threshold value, and control the electromagnetic valve (521) to be turned off in a case that the real-time speed signal does not exceed the speed threshold value.

10. A railroad train, comprising a train body and a braking system, wherein the braking system is provided with the train brake cylinder pressure control system according to any one of claims 1 to 9.

## Patentansprüche

1. Zugbremszylinderdruck-Steuersystem, aufweisend:
eine Lastdruck-Rückkopplungsvorrichtung (10), die dazu konfiguriert ist, einen Lastdruck basierend auf einer Lastsituation eines Zuges zu erzeugen;
einen Zugbremsluftbehälter (20), der so konfiguriert ist, dass er einen Bremsluftbehälterdruck ausgibt;
ein Verteilerventil (30), das zwei Eingangsenden und ein Ausgangsende aufweist und dazu konfiguriert ist, den Bremsluftspeicherdruck und einen Bremsleitungsdruck einzustellen und einen indirekten Bremsvorsteuerdruck phasisch auszugeben, wobei ein erstes Eingangsende (31) des Verteilerventils (30) mit dem Zugbremsluftbehälter (20) in Verbindung steht und ein zweites Eingangsende (32) des Verteilerventils (30) mit einer Zugbremsleitung in Verbindung steht;
ein bidirektionales Ventil (40), das zwei Eingangsenden und ein Ausgangsende aufweist und so konfiguriert ist, dass es den größeren von einem geraden Luftbremsvorsteuerdruck, der von einer Drucksteuervorrichtung (410) erhalten wird, und dem indirekten Bremsvorsteuerdruck auswählt und ausgibt, wobei ein erstes Eingangsende (41) des bidirektionalen Ventils (40) mit dem Zugbremsluftbehälter (20) über eine Steuerleitung in Verbindung steht und ein zweites Eingangsende (42) des bidirektionalen Ventils (40) mit dem Ausgangsende des Verteilerventils (30) in Verbindung steht, und die Steuerleitung mit der Drucksteuervorrichtung (410) versehen ist;
ein Relaisventil (50), das konfiguriert ist, einen Zugbremsdruck einzustellen und einen Bremszylinderdruck auszugeben, wobei das Relaisventil (50) vier Druckeingangsenden und ein Druckausgangsende, ein erstes Druckeingangsende (51) des Relaisventils (50) ein Grundsteuerdruck-Eingangsende ist, ein zweites Druckeingangsende (52) des Relaisventils (50) ein Hoch-Niederdruck-gesteuertes Druckeingangsende ist, und das erste Druckeingangsende (51) und das zweite Druckeingangsende (52) in paralleler Verbindung mit dem Ausgangsende des bidirektionalen Ventils (40) stehen, ein elektromagnetisches Ventil (521) in einer parallelen Rohrleitung vorgesehen ist, wo das zweite Druckeingangsende (52) vorgesehen ist, ein drittes Druckeingangsende (53) des Relaisventils (50) ein Bremsluftreservoir-Druckeingangsende ist und mit dem Zugbremsluftreservoir (20) in Verbindung steht, und ein viertes Druckeingangsende (54) des Relaisventils (50) ein Lastdruckeingangsende ist und mit der Lastdruck-Rückkopplungsvorrichtung (10) in Verbindung steht; und
einen Bremsausführungsmechanismus (60), der mit dem Ausgangsende des Relaisventils (50) in Verbindung steht und so konfiguriert ist, dass er Räder des Zuges unter Verwendung des Bremszylinderdrucks bremst.

2. Zugbremszylinderdruck-Steuersystem nach Anspruch 1, wobei ein Eingangsende der Lastdruck-Rückkopplungsvorrichtung (10) mit einer Luftfeder des Zuges in Verbindung steht und ein Ausgangsende der Lastdruck-Rückkopplungsvorrichtung (10) mit dem vierten Druckeingangsende (54) des Relaisventils (50) in Verbindung steht, und die Lastdruck-Rückkopplungsvorrichtung (10) so konfiguriert ist, dass sie den von der Luftfeder des Zuges bereitgestellten Lastdruck an das Relaisventil (50) durch das vierte Druckeingangsende (54) überträgt.

3. Zugbremszylinderdruck-Steuersystem nach Anspruch 2, wobei die Lastdruck-Rückkopplungsvorrichtung (10) ferner mit einem Drucksensor versehen ist, der konfiguriert ist, einen Wert des Lastdrucks zu erfassen.

4. Zugbremszylinderdruck-Steuersystem nach Anspruch 1, wobei die Drucksteuervorrichtung (410) ein erstes elektromagnetisches Ventil (411), ein zweites elektromagnetisches Ventil (412) und ein Druckminderventil (413) aufweist, die nacheinander in einer Lufteinlassrichtung vorgesehen sind.

5. Zugbremszylinderdruck-Steuersystem nach Anspruch 4, wobei eine erste Umgehung in Verbindung mit der Außenseite zwischen dem ersten Elektromagnetventil (411) und dem zweiten elektromagnetischen Ventil (412) vorgesehen ist, und die erste Umgehung mit einem dritten elektromagnetischen Ventil (414) versehen ist.

6. Zugbremszylinderdruck-Steuersystem nach Anspruch 5, wobei eine zweite Umgehung zwischen dem zweiten elektromagnetischen Ventil (412) und dem Druckminderventil (413) vorgesehen ist und die zweite Umgehung mit einem Luftbehälter (415) erster Kapazität in Verbindung steht.

7. Zugbremszylinderdruck-Steuersystem nach Anspruch 6, wobei eine dritte Umgehung zwischen dem Verteilerventil (30) und dem bidirektionalen Ventil (40) vorgesehen ist und die dritte Umgehung mit einem Luftbehälter (33) zweiter Kapazität in Verbindung steht.

8. Zugbremszylinderdruck-Steuersystem nach Anspruch 7, ferner aufweisend ein unidirektionales Ventil, wobei ein Eingangsende des unidirektionalen Ventils mit dem Ausgangsende des Relaisventils (50) in Verbindung steht und ein Ausgangsende des unidirektionalen Ventils in Verbindung mit dem dritten Druckeingangsende (53) steht.

9. Zugbremszylinderdruck-Steuersystem nach Anspruch 8, ferner aufweisend:
einen Geschwindigkeitssensor, der konfiguriert ist, eine Fahrgeschwindigkeit des Zuges in Echtzeit zu erfassen und ein Echtzeit-Geschwindigkeitssignal zu übertragen; und
eine Hoch-Niederdruck-Einstellvorrichtung für den Bremszylinderdruck, die mit dem Geschwindigkeitssensor und dem elektromagnetischen Ventil (521) in Verbindung steht und dazu konfiguriert ist, das Echtzeit-Geschwindigkeitssignal zu empfangen und zu bestimmen, ob das Echtzeit-Geschwindigkeitssignal einen Geschwindigkeitsschwellenwert überschreitet, und das elektromagnetische Ventil (521) so zu steuern, dass es in einem Fall eingeschaltet wird, bei dem das Echtzeit-Geschwindigkeitssignal den Geschwindigkeitsschwellenwert überschreitet, und das elektromagnetische Ventil (521) so zu steuern, dass es in einem Fall ausgeschaltet wird, bei dem das Echtzeit-Geschwindigkeitssignal den Geschwindigkeitsschwellenwert nicht überschreitet.

10. Eisenbahnzug, aufweisend einen Zugkörper und ein Bremssystem, wobei das Bremssystem mit dem Zugbremszylinderdruck-Steuersystem nach einem der Ansprüche 1 bis 9 versehen ist.

## Revendications

1. Système de régulation de pression de cylindre de frein de train, le système comprenant :
un dispositif (10) de rétroaction de pression sous charge, conçu pour produire une pression sous charge en fonction d'une situation de charge d'un train ;
un réservoir (20) d'air de frein de train, conçu pour délivrer une pression de réservoir d'air de frein ;
une soupape de distribution (30) comprenant deux extrémités d'entrée et une extrémité de sortie, et conçue pour régler la pression du réservoir d'air de frein et une pression d'une conduite générale et pour délivrer une pression de pré-régulation de freinage indirect de manière phasique, une première extrémité d'entrée (31) de la soupape de distribution (30) étant en communication avec le réservoir (20) d'air de frein de train, et une seconde extrémité d'entrée (32) de la soupape de distribution (30) étant en communication avec une conduite générale du train ;
une soupape bidirectionnelle (40) comprenant deux extrémités d'entrée et une extrémité de sortie, et conçue pour choisir et pour délivrer la plus grande pression parmi une pression de pré-régulation de freinage à air direct obtenue par un dispositif de régulation de pression (410) et la pression de pré-régulation de freinage indirect, une première extrémité d'entrée (41) de la soupape bidirectionnelle (40) étant en communication avec le réservoir (20) d'air de frein de train par l'intermédiaire d'une conduite de régulation, et une seconde extrémité d'entrée (42) de la soupape bidirectionnelle (40) étant en communication avec l'extrémité de sortie de la soupape de distribution (30), et la conduite de régulation étant munie du dispositif de régulation de pression (410) ;
une soupape relais (50) conçue pour régler une pression de freinage du train et pour délivrer une pression de cylindre de frein, la soupape relais (50) comprenant quatre extrémités d'entrée de pression et une extrémité de sortie de pression, une première extrémité d'entrée de pression (51) de la soupape relais (50) étant une extrémité d'entrée de pression de régulation de base, une deuxième extrémité d'entrée de pression (52) de la soupape relais (50) étant une extrémité d'entrée de pression régulée à pression haute-basse, et la première extrémité d'entrée de pression (51) et la deuxième extrémité d'entrée de pression (52) étant en communication parallèle avec l'extrémité de sortie de la soupape bidirectionnelle (40), une soupape électromagnétique (521) étant disposée dans une conduite parallèle où la deuxième extrémité d'entrée de pression (52) est disposée, une troisième extrémité d'entrée de pression (53) de la soupape relais (50) étant une extrémité d'entrée de pression du réservoir d'air de frein et étant en communication avec le réservoir (20) d'air de frein de train, et une quatrième extrémité d'entrée de pression (54) de la soupape relais (50) étant une extrémité d'entrée de pression sous charge et étant en communication avec le dispositif (10) de rétroaction de pression sous charge ; et
un mécanisme d'exécution de frein (60), en communication avec l'extrémité de sortie de la soupape relais (50) et conçu pour freiner les roues du train à l'aide de la pression du cylindre de frein.

2. Le système de régulation de pression de cylindre de frein de train selon la revendication 1, dans lequel une extrémité d'entrée du dispositif (10) de rétroaction de pression sous charge est en communication avec une suspension pneumatique du train, et une extrémité de sortie du dispositif (10) de rétroaction de pression sous charge est en communication avec la quatrième extrémité d'entrée de pression (54) de la soupape relais (50), et le dispositif (10) de rétroaction de pression sous charge est conçu pour transmettre la pression sous charge, fournie par la suspension pneumatique du train, à la soupape relais (50) par l'intermédiaire de la quatrième extrémité d'entrée de pression (54).

3. Le système de régulation de pression de cylindre de frein de train selon la revendication 2, dans lequel le dispositif (10) de rétroaction de pression sous charge est muni en outre d'un capteur de pression conçu pour détecter une valeur de la pression sous charge.

4. Le système de régulation de pression de cylindre de frein de train selon la revendication 1, dans lequel le dispositif de régulation de pression (410) comprend une première soupape électromagnétique (411), une deuxième soupape électromagnétique (412) et une soupape de réduction de pression (413), disposées successivement dans une direction d'admission d'air.

5. Le système de régulation de pression de cylindre de frein de train selon la revendication 4, dans lequel une première dérivation, en communication avec l'extérieur, est disposée entre la première soupape électromagnétique (411) et la deuxième soupape électromagnétique (412), et la première dérivation est munie d'une troisième soupape électromagnétique (414).

6. Le système de régulation de pression de cylindre de frein de train selon la revendication 5, dans lequel une deuxième dérivation est disposée entre la deuxième soupape électromagnétique (412) et la soupape de réduction de pression (413), et la deuxième dérivation est en communication avec un premier réservoir d'air (415) d'une certaine capacité.

7. Le système de régulation de pression de cylindre de frein de train selon la revendication 6, dans lequel une troisième dérivation est disposée entre la soupape de distribution (30) et la soupape bidirectionnelle (40), et la troisième dérivation est en communication avec un second réservoir d'air (33) d'une certaine capacité.

8. Le système de régulation de pression de cylindre de frein de train selon la revendication 7, comprenant en outre une soupape unidirectionnelle, une extrémité d'entrée de la soupape unidirectionnelle étant en communication avec l'extrémité de sortie de la soupape relais (50), et une extrémité de sortie de la soupape unidirectionnelle étant en communication avec la troisième extrémité d'entrée de pression (53).

9. Le système de régulation de pression de cylindre de frein de train selon la revendication 8, comprenant en outre :
un capteur de vitesse conçu pour détecter en temps réel une vitesse de déplacement du train, et pour émettre un signal de vitesse en temps réel ; et
un dispositif de réglage à pression haute-basse de la pression du cylindre de frein, le dispositif étant en communication avec le capteur de vitesse et avec la soupape électromagnétique (521), et étant conçu pour recevoir le signal de vitesse en temps réel et pour déterminer si le signal de vitesse en temps réel dépasse une valeur seuil de vitesse, et pour commander la mise sous tension de la soupape électromagnétique (521) si le signal de vitesse en temps réel dépasse la valeur seuil de vitesse, et pour commander la mise hors tension de la soupape électromagnétique (521) si le signal de vitesse en temps réel ne dépasse pas la valeur seuil de vitesse.

10. Train ferroviaire, comprenant un corps de train et un système de freinage, le système de freinage étant muni du système de régulation de pression de cylindre de frein de train selon l'une quelconque des revendications 1 à 9.
